Europäisches Patentamt

European Patent Office

Office européen des brevets

(11) Veröffentlichungsnummer: **0 418 528 A1**

# (12) EUROPÄISCHE PATENTANMELDUNG

(21) Anmeldenummer: 90115034.2

(22) Anmeldetag: 04.08.90

(51) Int. Cl.5: **H01M 8/02**

(30) Priorität: 11.09.89 CH 3271/89

(43) Veröffentlichungstag der Anmeldung:
27.03.91 Patentblatt 91/13

(84) Benannte Vertragsstaaten:
**CH DE FR GB IT LI NL SE**

(71) Anmelder: **ASEA BROWN BOVERI AG**
**Haselstrasse**
**CH-5401 Baden(CH)**

(72) Erfinder: **Nazmy, Mohamed Y., Dr.**
**Zeliglistrasse 30**
**CH-5442 Fislisbach(CH)**

(54) **Stromkollektor für keramische Brennstoffzellen.**

(57) Stromkollektor (5) zur Stromleitung zwischen benachbarten ebenen, stapelförmig angeordneten keramischen Brennstoffzellen mit Feststoffelektrolyt (1), Sauerstoffelektrode (2) und Brennstoffelektrode (3), wobei zwischen benachbarten Brennstoffzellen eine gasdichte, elektrisch leitende Trennplatte (4) angeordnet ist, bestehend aus federnden Elementen aus einem dispersiosngehärteten Edelmetall aus der Gruppe Au, Pd, Pt, Rh oder einer beliebigen Legierung mindestens zweier dieser Elemente. Die Dispersoide (6) in Form von Oxyd- oder Karbidpartikeln sind über den Querschnitt des Stromkollektors (5) gleichmässig verteilt.

# FIG.1

## STROMKOLLEKTOR FÜR KERAMISCHE BRENNSTOFFZELLEN

### Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engeren Sinne betrifft die Erfindung einen stromkollektor zur Stromleitung zwischen benachbarten flachen, ebenen, stapelförmig angeordneten keramischen Brennstoffzellen mit Feststoffelektrolyt auf der Basis von dotiertem, stabilisiertem zirkonoxyd, wobei jeweils die sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist.

### Stand der Technik

Hochtemperatur-Brennstoffzellen mit keramischem Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode der nächstfolgenden Zelle geleitet werden. Als wesentliche Bauelemente sind für diese Funktion elektrische Verbindungsglieder zu den Elektroden (Stromkollektoren) erforderlich.

Die bisher bekannten Stromkollektoren befriedigen vielfach bezüglich der verwendeten Werkstoffe, der Konstruktion und Fabrikation sowie dem Langzeitverhaltenden modernen Anforderungen nicht.

Die bekannten, für Brennstoffzellen verwendeten Grundelemente zeichnen sich meistens durch eine vergleichsweise komplizierte Geometrie aus, die den Bau von kompakten, raumsparenden Anlagen erschwert. Insbesondere fehlt eine für eine optimale Serieschaltung der Einzelzellen brauchbare Konfiguration, die sich mit einfachen Fabrikationsmitteln realisieren lässt.

Es besteht daher ein grosses Bedürfnis nach Weiterentwicklung, Vereinfachung und Rationalisierung des Aufbaus und der Herstellung insbesondere von Stromkollektoren und deren optimale gegenseitige Anordnung basierend auf keramischen Hochtemperatur-Brennstoffzellen.

Zum Stand der Technik werden die nachfolgenden Druckschriften genannt:
- O.Antonsen, W.Baukal und W.Fischer, "Hochtemperatur-Brennstoffbatterie mit keramischem Elektrolyten", Brown Boveri Mitteilungen Januar/Februar 1966, Seiten 21-30,
- US-A-4 692 274
- US-A-4 395 468
- W.J.Dollard und W.G.Parker, "An overview of the Westinghouse Electric Corporation solid oxide fuel cell program", Extended Abstracts, Fuel Cell Technology and Applications, International Seminar, Den Haag, Niederlande, 26. bis 29. Oktober 1987.
- F.J.Rohr, High-Temperature Fuel Cells, Solid Electrolytes, 1978 by Academic Press, Inc., Seite 431 ff.
- D.C.Fee et al., Monolithic Fuel Cell Development, Argonne National Laboratory, Paper presented at the 1986 Fuel Cell Seminar, Oct. 26-29, 1986 Tucson, AZ, U.S. Department of Energy, The University of Chicago.
- F.R.Morral, Consultant, Battelle's Columbus Laboratories, Columbus, Ohio, "Dispersion strengthening of Metals", MCIC Report, April 1977, Metals and Ceramics Information Center.

### Darstellung der Erfindung

Der Erfindung liegt die Aufgabe zugrunde, einen Stromkollektor zur Stromleitung zwischen benachbarten ebenen, stapelförmig angeordneten keramischen Brennstoffzellen anzugeben, welcher einerseits einen guten elektrischen Kontakt sowohl zu den Elektroden der Brennstoffzelle wie zu den übrigen Bauteilen bei Temperaturen bis zu 900 °C gewährleistet, seinerseits eine hohe metallische elektrische Leitfähigkeit besitzt und sowohl in reduzierender, neutraler wie in oxydierender Atmosphäre ohne nachteilige Veränderungen durch Materialwanderungen wie Diffusions- oder andere Migrationsvorgänge oder Materialverluste durch Abdampfen etc. eingesetzt werden kann und eine hohe Langzeitstabilität aufweist. Der Stromkollektor soll kostengünstig, reproduzierbar und auswechselbar hergestellt werden können.

Diese Aufgabe wird dadurch gelöst, dass der eingangs erwähnte Stromkollektor aus einer Vielzahl von bei einer Betriebstemperatur von 900 °C vollelastischen, ihrerseits eine Vielzahl von elektrischen Kontaktstellen gewährlei stenden, nichtoxydierenden federnden Elementen aus einem dispersionsgehärteten metallischen Werkstoff, ausgewählt aus der Gruppe der Edelmetalle Au, Pd, Pt, Rh oder einer beliebigen Legierung mindestens zweier dieser Elemente besteht.

Weg zur Ausführung der Erfindung

Die Erfindung wird anhand der nachfolgenden, durch Figuren näher erläuterten Ausführungsbeispiele beschrieben.

Dabei zeigt:

Fig. 1 einen Aufriss/Längsschnitt durch eine Brennstoffzellenanordnung mit Trennplatte und Stromkollektoren (allgemein),

Fig. 2 einen Aufriss/Längsschnitt durch einen Stromkollektor in Form eines einzelnen Kontaktfingers,

Fig. 3 einen Aufriss/Längsschnitt durch einen Stromkollektor in Form einer Vielzahl von aus Blech gestanzten Kontaktfingern,

Fig. 4 einen Aufriss eines Stromkollektors in Form eines gewellten Bandes,

Fig. 5 einen Aufriss eines Stromkollektors in Form eines wendelartigen Drahtes,

Fig. 6 einen Aufriss/Längsschnitt durch einen Stromkollektor in Form eines Geflechtes (Metallgewebe).

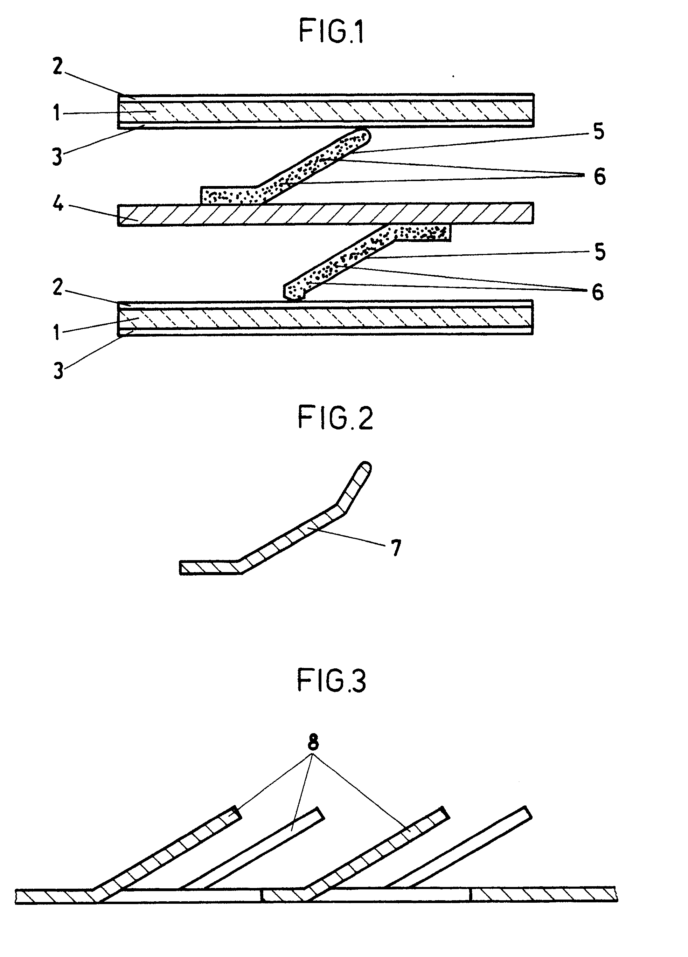

In Fig. 1 ist ein Aufriss/Längsschnitt durch eine Brennstoffzellenanordnung mit Trennplatte und Stromkollektoren allgemein schematisch dargestellt. Jede Brennstoffzelle besteht aus dem keramischen Feststof felektrolyten 1 aus dotiertem und stabilisiertem $ZrO_2$ und den mit diesem fest verbundenen Elektroden 2 und 3. 2 stellt die poröse Sauerstof felektrode aus Ni/$ZrO_2$-Germet, 3 die entsprechende poröse Brennstof felektrode aus dotiertem La/Mn-Perowskit dar. 4 ist eine gasdichte, elektirsch leitende Trennplatte. Diese dient einesteils der Unterteilung des sich zwischen zwei benachbarten Brennstoffzellen befindlichen Gasraumes in je eine den gasförmigen Brennstoff ($CH_4$) und eine den gasförmigen Sauerstoffträger (Luft) führende Kammer, anndernteils zum Stromtransport zwischen zwei Brennstoffzellen. Sie besteht vorzugsweise aus einem elastischen metallischen Werkstoff. Als Alternativen kommen auch geeignete keramische Werkstoffe oder Cermets in Frage. 5 ist ein Stromkollektor aus einem dispersionsgehärteten Edelmetall. 6 stellen die Dispersoide in Form von über den ganzen Querschnitt verteilten Oxyd- oder Karbidpartikel dar.

Fig. 2 bezieht sich auf einen Aufriss/Längsschnitt durch einen Stromkollektor in Form eines einzelnen Kontaktfingers. 7 stellt diesen einzelnen Kontaktfinger dar, der im vorliegenden Fall aus einer zweimal abgewinkelten, aus einem dünnen schmalen Band gefertigten Flachfeder besteht. Auf die Darstellung der Dispersoide ist verzichtet worden.

Fig. 3 zeigt einen Aufriss/Längsschnitt durch einen Stromkollektor in Form einer Vielzahl von aus Blech gestanzten Kontaktfingern. Die Vielzahl der Kontaktfinger 8 wird derart aus dem Blech gestanzt, dass jeweils eine Schmalseite mit dem letzteren verbunden bleibt. Dann werden die ausgeschnittenen Lappen hochgebogen. Durch geeignete Versetzung der Lappen benachbarter Reihen kann eine maximale Dichte der Kontaktstellen der Gesamtheit der Kontaktfinger 8 erzielt werden. Selbstverständlich können die Kontaktfinger 8 auch eine beliebige andere Form (beispielsweise gemäss Fig. 2) aufweisen.

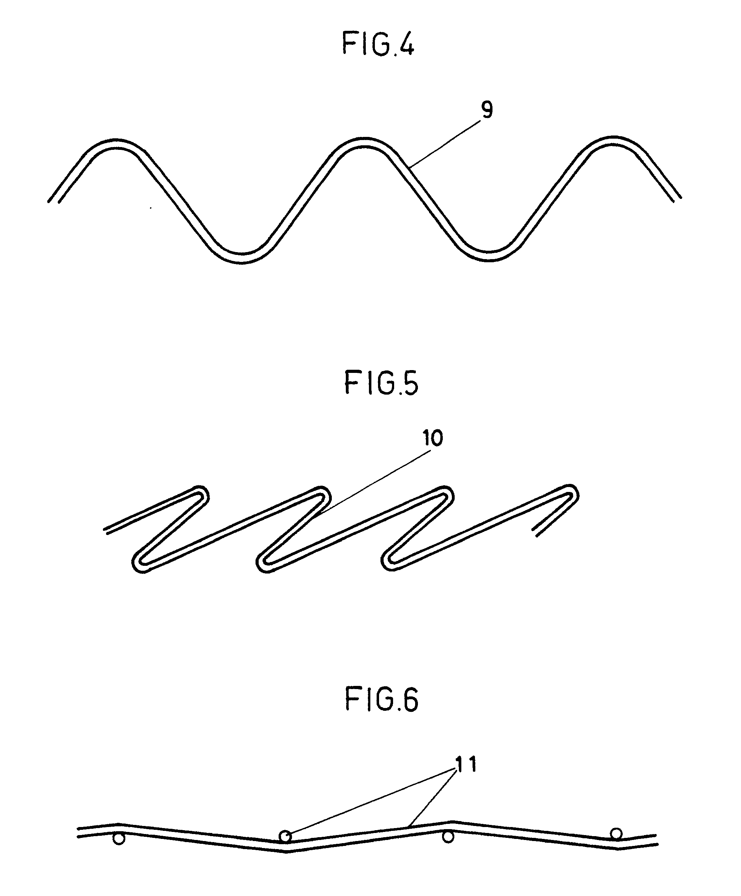

In Fig. 4 ist ein Aufriss eines Stromkollektors in Form eines gewellten Bandes dargestellt. Die Dimensionen (Breite, Dicke, Amplitude und Wellenlänge der Welle) des gewellten Bandes 9 können nach den Betriebserfordernissen weitgehend frei gewählt werden. Diese werden von der verlangten Elastizität (Federkonstante) und dem zu erzielenden Kontaktdruck bestimmt.

In Fig. 5 ist ein Aufriss eines Stromkollektors in Form eines wendelartigen Drahtes dargestellt. Es handelt sich beim Draht 10 um einen in der Längsachse gekippten (teilweise plattgedrückten) Wendel (Schraubenlinie), um eine niedrigere Federkonstante in der Querrichtung (Richtung senkrecht zur Plattenebene der Brennstoffzellen) zu erzielen. Für die Dimensionierung gilt grundsätzlich das oben Gesagte.

Fig. 6 stellt einen Aufriss/Längsschnitt durch einen Stromkollektor in Form eines Geflechtes (Metallgewebe) dar. Das Geflecht 11 ist im Ausgangszustand (flaches Gewebe) gezeichnet. Es kann durch Pressen in jede beliebige geeignete Form wie Wellen, Falten, Höcker, Noppen etc. gebracht wer den, um die Bedingungen für die Abstände zwischen Brennstoffzelle und Trennplatte sowie für die angestrebte Elastizität zu erfüllen.

Ausführungsbeispiel 1: Siehe Fig. 2!

Es wurde ein Stromkollektor aus oxyddispersionsgehärtetem Gold hergestellt. Als Dispersoid wurde $ThO_2$ gewählt. Gold wurde in Königswasser gelöst und eine mit $ThO_2$-Partikeln von durchschnittlich 0,5 $\mu$m Durchmesser (max. 1 $\mu$m Durchmesser) dotierte $AuCl_3$-Lösung hergestellt. Die $ThO_2$-Partikel wurden durch Rühren in Suspension gehalten. Dann wurde Hydrazin $NH_2NH_2$ als Fällungsmittel zugegeben, so dass das $AuCl_3$ zu elementarem Au reduziert wurde, das die $ThO_2$-Partikel umhüllte. Die mit Au beschichteten $ThO_2$-Partikel wurden abfiltriert, im Vakuum getrocknet und in $H_2$-Atmosphäre während 3 h bei 930 $^\circ$C geglüht. Das Pulver wurde in eine Kupferdose abgefüllt, durch Vibration kalt verdichtet, evakuiert und bei 670 $^\circ$C mit einem Reduktionsverhältnis 35:1 zu einem Band von 15 mm Breite und 1 mm Dicke stranggepresst. Dieses Band wurde unter mehrfachen Zwischenglühungen bei 500 $^\circ$C auf eine Dikke von 0,15 mm heruntergewalzt. Die Endzusammensetzung betrug:
$ThO_2$ = 1,7 Gew.-% (ca. 3,5 Vol.-%)
Au = Rest

Aus dem Au-Band wurden Stromkollektoren in Form von Kontaktfingern von 1,2 mm Breite gestanzt und gepresst. Die fertig geformten Kontaktfinger wurden schliesslich allseitig 3 $\mu$m dick vergoldet.

Ausführungsbeispiel 2: Siehe Fig. 2 und 3!

Ein Stromkollektor wurde aus oxyddispersionsgehärtetem Gold hergestellt. Als Dispersoid wurde $Al_2O_3$ gewählt. Es wurde zunächst schmelzmetallurgisch eine Au/Al-Legierung mit ca. 2,6 At.-% Al (0,36 Gew.-% Al) erzeugt. Die Legierung wurde zu Stäben vergossen und in mehreren Stichen warm auf ein Blech von ca. 0.5 mm Dicke heruntergewalzt. Durch weiteres Kaltwalzen wurde die Blechdicke auf ca. 0,08 mm verringert. Nun wurden aus diesem Au/Al-Blech Stromkollektoren in Form von Kontaktfingern von 0,8 mm Breite gestanzt und gepresst. Diese Kontaktfinger wurden in einer $O_2$-Atmosphäre unter einem $O_2$-Partialdruck von 2 bar während 5 h bei 880 $^\circ$C geglüht. Dabei oxydierte das Aluminium vollständig zu äusserst fein verteilten $Al_2O_3$-Dispersoiden.
Die Endzusammensetzung stellte sich wie folgt:
$Al_2O_3$ = 0,7 Gew.-% (ca. 3,5 Vol.-%)
Au = Rest

Ausführungsbeispiel 3: Siehe Fig. 2!

Es wurde ein Stromkollektor aus einer oxyddispersionsgehärteten Gold/Palladium-Legierung hergestellt. Als Dispersoid wurde $ThO_2$ gewählt. Prinzipiell wurde wie in Beispiel 1 verfahren. Eine abgewogene Menge von 80 Gewichtsteilen Gold und 20 Gewichtsteilen Palladium wurde in Königswasser gelöst, wobei sich eine Lösung von $AuCl_3$ und $PdCl_2$ bildete. Die Lösung wurde verdünnt, basisch eingestellt und mit $ThO_2$-Partikeln vermischt. Die Fällung der Elemente Au und Pd erfolgte mit $NH_2NH_2$. Im übrigen wurde genau gleich vorgegangen wie in Beispiel 1. Die Endzusammensetzung war wie folgt:
$ThO_2$ = 1 Gew.-% (ca. 2 Vol.-%)
Pd = 20 Gew.-%
Au = Rest

Der Stromkollektor in Form von Kontaktfingern hatte dieselbe Form und die gleichen Abmessungen wie unter Beispiel 1 angegeben. Dank des um ca. 300 $^\circ$C höheren Schmelzpunktes der Legierung wurden noch höhere Warmfestigkeitswerte erreicht als beim oxyddispersionsverfestigten reinen Gold.

Ausführungsbeispiel 4: Siehe Fig. 4!

Aus einer oxyddispersionsgehärteten Gold/Palladiumlegierung wurde ein Stromkollektor in Form eines gewellten Bandes hergestellt. Als Dispersoid wurde MgO gewählt. Zunächst wurde schmelzmetallurgisch eine Au/Pd/Mg-Legierung mit ca. 20 Gew.-% Pd und ca. 4,3 At.-% Mg (0,6 Gew.-% Mg) erzeugt. Analog zu Beispiel 2 wurde ein Stab gegossen und zu einem Band von ca. 0.5 mm Dicke ausgewalzt. Durch Kaltwalzen wurde die Dikke weiter auf ca. 0,08 mm reduziert. Daraufhin wurde das Band in 2 mm breite Streifen geschnitten und in einem Werkzeug in Wellenform gepresst. Die Amplitude der Welle betrug ca. 1 mm, die Wellenlänge ca. 2,5 mm. Nun wurden die in die endgültige Form gepressten Stromkollektoren in Form der gewellten Bänder in $O_2$-Atmosphäre unter einem $O_2$-Partialdruck von 3 bar während 2 h bei 950 $^\circ$C geglüht. Dabei oxydierte das Magnesium vollständig zu sehr feinen, gleichmässig verteilten MgO-Dispersoiden. Die Endzusammensetzung der Legierung war:
MgO = 1 Gew.-% (ca. 5 Vol.-%)
Pd = 20 Gew.-%
Au = Rest

Für die ausgezeichneten Eigenschaften dieser Legierung gilt grundsätzlich das unter Beispiel 3 Gesagte. Die Dispersoide aus MgO zeichnen sich durch hervorragende chemisch-thermodynamische Langzeitstabilität aus.

Ausführungsbeispiel 5: Siehe Fig. 4!

Nach pulvermetallurgischen Methoden wurde ein Stromkollektor aus dispersionsgehärtetem Palladium hergestellt. Als Dispersoid wurde Titankarbid TiC, eines der thermoynamisch stabilsten Karbide mit einem Schmelzpunkt von über 3100 $^\circ$C gewählt. Pd-Pulver mit einer maximalen Partikelgrösse von 5 $\mu$m wurde mit 0,05 Gew.-% TiC-Pulver mit einer maximalen Partikelgrösse von 0,5 $\mu$m während 24 h unter Toluol im Attritor (Hochgeschwindigkeits-Kugelmühle) gemahlen und mechanisch legiert. Das bis zur Sättigung kaltverformte Pulver wurde in eine Weicheisendose abgefüllt, evakuiert und gasdicht verschlossen. Die gefüllte Dose wurde bei einer Temperatur von 1100 $^\circ$C mit einem Reduktionsverhältnis von 40:1 zu einem Flachstab von 5 mm Breite und 1 mm Dicke stranggepresst. Durch Warm- und Kaltwalzen wurde die Dicke weiter auf ca. 0,07 mm verringert. Mehrere Bänder von 1,5 mm Breite und 0,07 mm Dicke wurden in Wellenform gepresst (Amplitude ca. 0,8 mm; Wellenlänge ca. 2 mm). Anschliessend wurden die wellenförmigen Stromkollektoren während 1 h bei 1250 $^\circ$C in Argonatmosphäre geglüht. Die Endzusammensetzung belief sich auf:

TiC = 0,05 Gew.-% (ca. 0,13 Vol.-%)
Pd = Rest

Dieser Werkstoff hielt im Versuch auch leicht oxydierender Atmosphäre bei 900 $^\circ$C ($O_2$-Partialdruck 0,1 bar) während langer Zeitdauer ohne Veränderung stand.

Ausführungsbeispiel 6: Siehe Fig. 5!

Aus oxyddispersionsgehärtetem Platin wurde ein Stromkollektor gefertigt. Als Dispersoid wurde $ThO_2$ gewählt. Platin wurde in Königswasser gelöst. Die $PtCl_4$-Lösung wurde leicht basisch eingestellt und mit $ThO_2$-Partikeln von max. 1 $\mu$m Durchmesser versetzt. Letztere wurden durch Rühren in Suspension gehalten. Im übrigen wurde genau gleich wie in Beispiel 1 verfahren. Die Glühung der mit Pt beschichteten $ThO_2$-Partikel erfolgte im Vakuum während 4 h bei 1000 $^\circ$C. Das Pulver wurde in eine Weicheisendose abgefüllt, kalt verdichtet, evakuiert und bei 1200 $^\circ$C mit einem Reduktionsverhältnis von 40:1 zu einem Draht von 2,5 mm Durchmesser stranggepresst. Der Draht wurde zunächst durch Warmwalzen, dann durch Ziehen mit Zwischenglühungen auf einen Durchmesser von 0,35 mm heruntergearbeitet. Nun wurde der Draht zu einem schiefen Wendel mit ovalem Querschnitt verformt. Die Höhe quer zur Längsachse betrug ca. 1,8 mm, die Breite ca. 2,4 mm. Die fertigen, aus mehreren Wendeln bestehenden Stromkollektoren wurden abschliesend bei 1300

$^\circ$C während 1 h in Argonatmosphäre geglüht. Die Endzusammensetzung stellte sich wie folgt:

$ThO_2$ = 0,6 Gew.-% (ca. 1,2 Vol.-%)
Pt = Rest.

Ausführungsbeispiel 7: Siehe Fig. 5!

Aus oxyddispersionsgehärtetem Platin wurde ein Stromkollektor in Form eines schiefen Wendels hergestellt. Als Dispersoid wurde MgO gewählt. Es wurde schmelzmetallurgisch eine Pt/Mg-Legierung mit ca. 4,0 At.-% Mg (0,57 Gew.-% Mg) erzeugt. Daraus wurde ein zylindrischer Körper gegossen und durch Strangpressen, Walzen und Ziehen auf einen Draht von 0,4 mm Durchmesser verarbeitet. Nun wurden die auf diese Weise hergestellten Stromkollektoren unter einem $O_2$-Partialdruck von 4 bar während 3 h bei einer Temperatur von 1200 $^\circ$C geglüht. Dabei oxydierte das Magnesium vollständig zu ultrafeinen MgO-Partikeln. Diese Dispersoide sind sehr stabil.

Die Endzusammensetzung der Legierung war:

MgO = 1 Gew.-% (ca. 5,8 Vol.-%)
Pt = Rest.

Ausführungsbeispiel 8: Siehe Fig. 6!

Es wurde nach pulvermetallurgischen Methoden ein Stromkollektor aus dispersionsgehärtetem Platin gefertigt. Als Dispersoid wurde Titankarbid TiC gewählt. Im Prinzip wurde ähnlich wie in Beispiel 5 verfahren. Pt-Pulver mit einer maximalen Partikelgrösse von 3 $\mu$m wurde mit 0,05 % Gewichtsteilen Tic-Pulver mit einer maximalen Partikelgrösse von 0,5 $\mu$m während 20 h unter Toluol im Attritor gemischt, gemahlen und mechanisch legiert. Das Pulver wurde in eine zylindrische Weicheisendose abgefüllt, evakuiert, gasdicht verschlossen, kaltgepresst und bei einer Temperatur von 1150 $^\circ$C mit einem Reduktionsverhältnis von 36:1 zu einem Draht von 3 mm Durchmesser stranggepresst. Der Draht wurde durch Warmwalzen, Warmziehen und Kaltziehen mit Zwischenglühungen auf einen Enddurchmesser von 0,25 mm gebracht.

Aus dem Draht wurde ein lockeres Drahtgeflecht mit einer Maschenweite von ca. 1 mm gefertigt. Dann wurde das Drahtgeflecht in einer Vorrichtung in steife Falten mit einem kleinen Abrundungsradius gepresst und die Falten in deren Längsrichtung nochmals alle ca. 5 mm geknickt. Auf diese Weise wurde ein mit Falten und Höckern versehener, vergleichsweise (senkrecht zur Plattenebene der Brennstoffzelle gesehen) steifer Stromkollektor geschaffen. Dieser wurde in Argonatmosphäre während 1 h bei 1280 $^\circ$C geglüht. Die

Endzusammensetzung stellte sich auf:
TiC = 0,05 Gew.-% (ca. 0,25 Vol.-%
) Pt = Rest.

Ausführungsbeispiel 9: Siehe Fig. 6!

Es wurde ein Stromkollektor aus einer oxyddispersionsgehärteten Platin/Rhodium-Legierung hergestellt. Als Dispersoid wurde $ThO_2$ gewählt. Eine abgewogene Menge von 90 Gewichtsteilenplatin, 10 Gewichtsteilen Rhodium und 0,22 Gewichtsteilen Thorium wurden in Königswasser aufgelöst, wobei sich die Chloride $PtCl_4$; $RhCl_3$ und $ThCl_4$ bildeten. Die Lösung wurde auf eine Trockenwalze gesprüht, die Ghloride im Vakuum bis zur Wasserfreiheit getrocknet und danach in $O_2$-Atmosphäre bei 900 °C geglüht. Dabei wandelte sich das Thorium in $ThO_2$ um, während die Pt-Metalle nur teilweise oxydiert wurden. Das Pulver wurde anschliessend im $H_2$-Strom bei 600 °C während 1 h geglüht, zu Tabletten gepresst und letztere in eine Weicheisendose abgefüllt. Die Weiterverarbeitung erfolgte durch Strangpressen bei 1180 °C mit einem Reduktionsverhältnis von 40:1 zu einem Draht von 3 mm Durchmesser. Dann wurde analog zu Beispiel 8 verfahren. Der aus einem plissierten Drahtgeflecht bestehende Stromkol lektor wurde zum Schluss einer Glühung bei 1300 °C unter Argonatmosphäre während 1 h unterzogen.
Die Endzusammensetzung war:
$ThO_2$ = 0,25 Gew.-% (ca. 0,5 Vol.-%)
Rh = 10 Gew.-%
Pt = Rest.

Die Erfindung ist nicht auf die Ausführungsbeispiele beschränkt.

Der Stromkollektor zur Stromleitung zwischen benachbarten flachen, ebenen, stapelförmig angeordneten keramischen Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist, besteht grundsätzlich aus einer Vielzahl von bei einer Betriebstemperatur von 900 °C vollelastischen, ihrerseits eine Vielzahl von elektrischen Kontaktstellen gewährleistenden, nichtoxydierenden federnden Elementen aus einem dispersionsgehärteten metallischen Werkstoff, ausgewählt aus der Gruppe der Edelmetalle Au, Pd, Pt, Rh oder einer beliebigen Legierung mindestens zweier dieser Elemente.

In einer ersten Ausführung besteht der Stromkollektor aus dem dispersionsgehärteten Werkstoff Edelmetall Au mit einem Zusatz von 0,5 bis 1,7 Gew.-% $ThO_2$ oder von 0,3 bis 0,7 Gew.-% $Al_2O_3$ als oxydischem Dispersoid oder aus dem dispersionsgehärteten Werkstoff Au/Pd-Legierung mit bis zu 20 Gew.-% Pd mit einem Zusatz von 0,5 bis 1 Gew.-% $ThO_2$ als oxydischem Dispersoid.

In einer weiteren Ausführung besteht der Stromkollektor aus dem dispersionsgehärteten Werkstoff Edelmetall Pd mit einem Zusatz von 0,5 bis 1,5 Gew.-% $ThO_2$ als oxydischem oder mit einem solchen von 0,02 bis 0,06 Gew.-% TiC als karbidischem Dispersoid.

Vorzugsweise besteht der Stromkollektor aus dem dispersionsgehärteten Werkstoff Edelmetall Pt mit einem Zusatz von 0,5 bis 6 Gew.-% $ThO_2$ oder von 0,2 bis 1 Gew.-% $Al_2O_3$ oder MgO als oxydischem oder mit einem solchen von 0,02 bis 0,08 Gew.-% TiC als karbidischem Dispersoid oder aus dem dispersionsgehärteten Werkstoff Pt/Rh-Legierung mit bis zu 10 Gew.-% Rh mit einem Zusatz von 0,2 bis 1 Gew.-% $ThO_2$ als oxydischem oder mit einem solchen von 0,02 bis 0,08 Gew.-% TiC als karbidischem Dispersoid.

Der Stromkollektor hat die Form eines einzelnen Kontaktfingers oder einer Vielzahl von aus einem Blech gestanzten Kontaktfingern oder die Form eines gerollten Bandes oder eines wendelartigen Drahtes oder eines Geflechtes.

**Ansprüche**

1. Stromkollektor (5) zur Stromleitung zwischen benachbarten flachen, ebenen, stapelförmig angeordneten keramischen Brennstoffzellen mit Feststoffelektrolyt (1) auf der Basis von dotiertem, stabilisiertem Zirkonoxyd, wobei jeweils die Sauerstoffelektrode (2) der einen Brennstoffzelle mit der Brennstoffelektrode (3) der nächstfolgenden Brennstoffzelle elektrisch verbunden und der zwischen den Elektroden (2; 3) liegende Zwischenraum durch eine gasdichte, elektrisch leitende Trennplatte (4) in zwei, die unterschiedlichen gasförmigen Medien Brennstoff und Sauerstoffträger führenden Räume unterteilt ist, dadurch gekennzeichnet, dass er aus einer Vielzahl von bei einer Betriebstemperatur von 900 °C vollelastischen, ihrerseits eine Vielzahl von elektrischen Kontaktstellen gewährleistenden, nichtoxydierenden federnden Elementen aus einem dispersionsgehärteten metallischen Werkstoff, ausgewählt aus der Gruppe der Edelmetalle Au, Pd, Pt, Rh oder einer beliebigen Legierung mindestens zweier dieser elemente besteht.

2. Stromkollektor nach Anspruch 1, dadurch gekennzeichnet, dass der dispersionsgehärtete Werkstoff aus dem Edelemetall Au mit einem Zusatz von 0,5 bis 1,7 Gew.-% $ThO_2$ oder von 0,3 bis 0,7 Gew.-% $Al_2O_3$ als oxydisches Dispersoid besteht.

3. Stromkollektor nach Anspruch 1, dadurch gekennzeichnet, dass der dispersionsgehärtete Werkstoff aus einer Au/Pd-Legierung mit bis zu 20 Gew.-% Pd mit einem Zu satz von 0,5 bis 1 Gew.-% $ThO_2$ als oxydisches Dispersoid besthet.

4. Stromkollektor nach Anspruch 1, dadurch gekennzeichnet, dass der dispersionsgehärtete Werkstoff aus dem Edelmetall Pd mit einem Zusatz von 0,5 bis 1,5 Gew.-% $ThO_2$ als oxydisches oder mit einem solchen von 0,02 bis 0,06 Gew.-% TiC als karbidisches Dispersoid besteht.

5. Stromkollektor nach Anspruch 1, dadurch gekennzeichnet, dass der dispersionsgehärtete Werkstoff aus dem Edelmetall Pt mit einem Zusdatz von 0,5 bis 6 Gew.-% $ThO_2$ oder von 0,2 bis 1 Gew.-% $Al_2O_3$ oder MgO als oxydisches oder mit einem solchen von 0,02 bis 0,08 Gew.-% TiC als karbidisches Dispersoid besteht.

6. Stromkollektor nach Anspruch 1, dadurch gekennzeichnet, dass der dispersionsgehärtete Werkstoff aus einer Pt/Rh-Legierung mit bis zu 10 Gew.-% Rh mit einem Zusatz von 0,2 bis 1 Gew.-% $ThO_2$ als oxydisches oder mit einem solchen von 0,02 bis 0,08 Gew.-% TiC als karbidisches Dispersoid besteht.

7. Stromkollektor nach einem der vorangegangenen Ansprüche, dadurch gekennzeichent, dass er die Form eines einzelnen Kontaktfingers (7) oder einer Vielzahl von aus einem Blech gestanzten Kontaktfingern (8) oder eines gerollten Bandes (9) oder eines wendelartigen Drahtes (10) oder eines Geflechtes (11) aufweist.

FIG.1

FIG.2

FIG.3

# FIG.4

9

# FIG.5

10

# FIG.6

11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 13, Nr. 235 (E-766)[3583], 30. Mai 1989; & JP-A-141 172 (MITSUBISHI HEAVY IND., LTD) 13-02-1989 * Zusammenfassung * | 1,7 | H 01 M 8/02 |
| A | WO-A-8 606 762 (M. HSU) | | |
| A | CH-A-4 907 42 (BROWN, BOVERI) | | |
| A | US-A-3 300 344 (D.T. BRAY et al.) | | |
| A | FR-A-1 433 469 (COMPAGNIE FRANCAISE THOMSON-HOUSTON) | | |
| A | PATENT ABSTRACTS OF JAPAN, Band 11, Nr. 138 (E-503)[2585], 2. Mai 1987; & JP-A-61 279 068 (ISHIKAWAJIMA HARIMA HEAVY IND. CO., LTD) 09-12-1986 | | |

| RECHERCHIERTE SACHGEBIETE (Int. Cl.5) |
|---|
| H 01 M |

Der vorliegende Recherchenbericht wurde für alle Patentansprüche erstellt

| Recherchenort | Abschlußdatum der Recherche | Prüfer |
|---|---|---|
| Den Haag | 21 Dezember 90 | D'HONDT J.W. |